(19) Europäisches Patentamt
European Patent Office
Office européen des brevets

(11) **EP 4 403 741 A1**

(12) **EUROPÄISCHE PATENTANMELDUNG**

(43) Veröffentlichungstag:
**24.07.2024  Patentblatt 2024/30**

(21) Anmeldenummer: **23152005.7**

(22) Anmeldetag: **17.01.2023**

(51) Internationale Patentklassifikation (IPC):
**E21B 17/042** (2006.01)    **F16L 15/00** (2006.01)
**F16L 15/06** (2006.01)

(52) Gemeinsame Patentklassifikation (CPC):
**E21B 17/042;** F16L 15/001; F16L 15/06;
F16L 55/1658

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **TRACTO-TECHNIK GmbH & Co. KG
57368 Lennestadt (DE)**

(72) Erfinder:
• **Göcke,  Frank
57368 Lennestadt (DE)**
• **Klein, Tobias
57368 Lennestadt (DE)**
• **Wurm, Dieter
57399 Kirchhundem (DE)**

(74) Vertreter: **König Szynka Tilmann von Renesse
Patentanwälte Partnerschaft mbB Düsseldorf
Mönchenwerther Straße 11
40545 Düsseldorf (DE)**

(54) **GEWINDEVERBINDUNG**

(57)    Die Erfindung betrifft einen Gewindestecker an einem langgestreckten Körper für eine Gewindeverbindung mit einer Gewindebuchse, wobei der Gewindestecker ein konisches Außengewinde aufweist, bei dem ein Abschnitt einer Flanke des Außengewindes als Abschnitt einer Funktion darstellbar ist, die eine Krümmung aufweist, wobei der Abschnitt der Funktion über eine Höhe des mindestens 0,3-fachen der Gewindehöhe einen Winkel zu einer Verbindungslinie benachbarter Gewindegründe bzw. Gewindespitzen aufweist, der größer als 45° ist.

EP 4 403 741 A1

**Beschreibung**

Die Erfindung betrifft einen Gewindestecker, eine Gewindebuchse, eine Verwendung eines Gewindesteckers, eine Verwendung einer Gewindebuchse und eine Gewindeverbindung mit einem Gewindestecker und einer Gewindebuchse, wobei die beschriebenen Entitäten für eine Erdbohrvorrichtung ausgestaltet sein können.

Unter dem Begriff "Erdbohrvorrichtung" werden Vorrichtungen verstanden, mit denen eine Antriebsleistung einer Antriebsvorrichtung über ein Gestänge auf ein Werkzeug, das an einem Gestänge, insbesondere endseitig, angeordnet ist, übertragen werden. Hierunter fallen insbesondere Erdbohrvorrichtungen, mit denen Erdbohrungen und insbesondere Horizontalbohrungen in das Erdreich eingebracht werden. Hierbei werden von der Antriebsvorrichtung in der Regel Schub- oder Druckkräfte über das Gestänge auf das als Bohrkopf ausgebildete Werkzeug übertragen. Es ist auch möglich, dass eine Drehbewegung auf das Gestänge um die Längsachse desselben mittels der Erdbohrvorrichtung aufgeprägt werden kann. Mittels der Erdbohrvorrichtungen können bestehende Bohrungen im Erdreich bzw. bereits verlegte Altleitungen aufgeweitet oder herausgezogen werden und gegebenenfalls gleichzeitig ein Neurohr eingezogen werden. Häufig sind die Erdbohrvorrichtungen auch so ausgelegt, dass sie sowohl für das Erstellen der Erdbohrungen als auch für ein ziehendes Arbeiten, d. h. für ein Aufweiten einer bestehenden Bohrung oder einer Altleitung bzw. für das Einziehen eines Neurohrs verwendet werden können. Dies ermöglicht, mit derselben Erdarbeitsvorrichtung zunächst eine Pilotbohrung zu erstellen, wobei ein Pilotbohrkopf schiebend durch das Erdreich vorgetrieben wird, bis dieser eine Zielbaugrube erreicht, und der Pilotbohrkopf in der Zielbaugrube durch einen Aufweitkopf ersetzt wird, wobei die Pilotbohrung beim Zurückziehen des Bohrgestänges aufgeweitet wird. Gegebenenfalls kann gleichzeitig mit dem Aufweitkopf ein an diesen angehängtes Neurohr in die aufgeweitete Erdbohrung eingezogen werden.

Das Gestänge derartiger Erdarbeitsvorrichtungen besteht regelmäßig aus einer Mehrzahl von Gestängeschüssen, die dem Bohrvortrieb entsprechend nach und nach miteinander verbunden werden. Das Verbinden der einzelnen Gestängeschüsse erfolgt über Kupplungselemente, wobei neben Steckkupplungen, wie in DE 196 08 980 beschrieben, insbesondere Schraubverbindungen weit verbreitet sind. Wesentliche Vorteile von Schraubverbindungen sind die geringen Kosten, die mit ihrer Herstellung verbunden sind, sowie die Möglichkeit, das Verschrauben auf einfache Weise automatisiert durchführen zu lassen. Ein wesentlicher Nachteil von Schraubverbindungen ist jedoch, dass diese häufig die größten Schwachstellen des Gestänges darstellen, was auf den relativ geringen Durchmesser im Bereich des Gewindesteckers der Gewindeverbindung sowie auf die geometrisch bedingt hohe Kerbwirkung des Gewindes selbst zurückzuführen ist.

Aus EP 2 334 892 B1 ist eine Gewindeverbindung bekannt, bei der das Außengewinde eines Gewindesteckers so ausgebildet ist, dass Flanken dieses Außengewindes einen Abschnitt einer Ellipse ausbilden. Durch die Ausbildung der Flanken in Form eines Abschnitts einer Ellipse wird ein sich stetig ändernder Flankenwinkel erreicht, durch den ein optimierter Kontakt zwischen den Flanken des Gewindesteckers sowie den korrespondierenden Flanken eines Innengewindes einer entsprechenden Gewindebuchse erreicht werden kann. Gewindestecker und Gewindebuchse sind korrespondierend ausgestaltet.

Es sind auch API-Gewinde sowie Rundgewinde entsprechend der DIN 20 400 bekannt. Die Lebensdauer derartiger Gewindeformen hat sich jedoch im täglichen Betrieb der Erdbohrvorrichtungen als zu gering herausgestellt.

Es wurden daher alternative Gewindeformen entwickelt, die besonders für die bei Erdbohrvorrichtungen auftretenden spezifischen Belastungen des Gestänges ausgelegt sind. Die DE 198 03 304 A1 offenbart eine Gewindeverbindung, mit der Gestängeschüsse eines Bohrgestänges verbunden werden sollen, wobei das Bohrgestänge insbesondere zum Drehschlagbohren eingesetzt werden soll. Wesentliche Besonderheiten dieser Gewindeverbindungen sind die asymmetrische Form des Gewindes mit unterschiedlichen Steigungswinkeln der im Drehschlagbohrbetrieb Last-aufnehmenden sowie der nicht-Last-aufnehmenden Flanken sowie das Vorsehen eines gewindelosen Einführabschnitts. Die nicht-Last-aufnehmenden Flanken sollen zudem kreisbogenförmig ausgebildet sein. Auch die aus der DE 198 03 304 A1 bekannte Gewindeverbindung hat sich im täglichen Betrieb als nicht ausreichend robust erwiesen.

Aus der EP 0 324 442 B1 sowie der US-Patentschrift 5,060,740 sind ebenfalls asymmetrische Gewindeverbindungen bekannt, die für die Verwendung zum Verbinden von Gestängeschüssen von Erdbohrvorrichtungen ausgelegt wurden. Die in diesen Druckschriften offenbarten Gewindeverbindungen zeichnen sich dadurch aus, dass der Gewindegrund einen Abschnitt einer Ellipse ausbildet. Hierdurch soll ein möglichst kerbwirkungsfreier Übergang von dem Gewindegrund in die eben ausgebildeten Flanken des Gewindes ermöglicht werden.

Auch aus der WO 2006/092649 A1 sind Gewindeverbindungen für Gestänge von Erdbohrvorrichtungen bekannt, bei denen der Gewindegrund einen Abschnitt einer Ellipse ausbildet. Die in dieser Druckschrift offenbarten Gewindeformen können sowohl asymmetrisch als auch symmetrisch ausgebildet sein.

Obwohl insbesondere mit der aus EP 2 334 892 B1 bekannten Gewindeform gute Ergebnisse erzielbar sind, hat sich gezeigt, dass das Ausbilden und Lösen der Verbindung eine genauere Handhabung benötigt.

Ausgehend von diesem Stand der Technik lag der Erfindung daher die Aufgabe zugrunde, eine insbesondere die Ausbildung und das Lösen der Verbindung erleichternde Gewindeverbindung zu schaffen, deren Lebensdauer möglichst wenig bzw. nicht beeinträchtigt ist.

Diese Aufgabe wird durch die Gegenstände der unabhängigen Patentansprüche gelöst. Vorteilhafte Ausführungsformen sind Gegenstand der jeweiligen abhängigen Patentansprüche und ergeben sich aus der nachfolgenden Beschreibung der Erfindung.

Gemäß dem Kern der Erfindung wurde sich von der Vorstellung gelöst, nur eine Verringerung der Kerbwirkung berücksichtigen zu müssen und eine homogenere Spannungsverteilung erreichen zu wollen, weshalb man früher eine Ellipsenform am Gewindegrund vorgesehen hat. Durch die Ellipsenform traten die Spannungsmaxima weniger im Gewindegrund als im Bereich der Flanken auf. Bisher hatte man die perfekte Gewindeform mit einer einfachen elliptischen Ausbildung angenommen, da sich diese positiv auf die Lebensdauer der Gewindeverbindung auswirkt. Insbesondere auf dem Gebiet der Gestängeschüsse für Erdbohrvorrichtungen hat man an der Ellipsenform festgehalten. Die Überlegungen fußten darauf, dass in dem Bereich der Flanken regelmäßig keine geometrische Kerbe vorzufinden war und die Kerbwirkung im Gewindegrund dadurch verringert wurde. Erfindungsgemäß wurde nun erkannt, dass es nicht nur auf den Gewindegrund und eine Erstreckung auf den weiteren Flankenverlauf ankommt, sondern auch auf eine Ausgestaltung der Flanke im weiteren Verlauf beabstandet vom Gewindegrund. Die Erfindung stellt auf einen Abschnitt der Flanke ab, bei dem die an einen jeweiligen Punkt des Abschnitts angelegte Tagente einen Winkel zum Konus, auf dem das Gewinde aufgebracht ist, aufweist, der größer als 45° ist. Die Erfindung erweitert bzw. verändert die Ausgestaltung zumindest eines Abschnitts der Flanke auf eine Anpassung der Geometrie der Flanke an sich, wobei erfindungsgemäß insbesondere ein in Anlage mit dem anderen Schraubelement gelangender Abschnitt der Flanke betrachtet wird. Erfindungsgemäß wurde die Ausbildung der Flanken für einen Gewindestecker und/oder eine Gewindebuchse derart verändert, dass sich von der Form einer Ellipse gelöst wurde. Gemäß dem Kerngedanken der Erfindung ist der Abschnitt der Flanke gekrümmt und weist einen wesentlichen Anteil in der Gewindehöhe auf, bei dem der Winkel zu einer Verbindungslinie benachbarter Gewindegründe und/oder Gewindespitzen größer als 45° ist. Es wird dadurch möglich, eine effiziente Kraftübertragung der Schraubverbindung zu erhalten, wobei die vorteilhaften Eigenschaften einer zumindest im Abschnitt der Flanke gekrümmten Form verwendet werden können. Dabei wird mittels der Funktion die Möglichkeit geschaffen, die Form bis auf den Gewindegrund oder bis in die Nähe des Gewindegrunds auszudehnen, um Spannungen im Gewindegrund zu verringern.

Gemäß dem Kerngedanken der Erfindung wird ein zum Stand der Technik vollständig anderer Ansatz gewählt. Während im Stand der Technik die Form des Gewindegrunds auf die Flanke in Richtung einer Gewindespitze ausgedehnt wurde, kann vorliegend die Form der Flanke auf den Gewindegrund ausgedehnt werden. Überraschenderweise hat sich gezeigt, dass die für die Flanke vorgesehene Form auch eine Verbesserung zur Verringerung von Spannungen im Gewindegrund ermöglicht. Eine verbesserte Kraftübertragung, ein verbessertes Gleiten und/oder eine Verringerung der Spannungen im Gewindegrund kann bzw. können erreicht werden, so dass zum einen einer Beschädigung des Gewindes durch ein Scheren oder eine verschlechterte Gewindeführung, welches umgangssprachlich allgemein als Kaltverschweißen des Gewindes bezeichnet wird, und/oder einer Kerbwirkung im Gewindegrund entgegengewirkt werden kann.

Es mutet zunächst paradox an, dass eine seit Jahrzehnten bekannte Schraubverbindung, deren Hauptfunktion es ist, zwei Teile mittels Form- und Kraftschluss elastisch zu verspannen, nicht schon bekannt ist, wie diese hier vorgeschlagen ist, aber die bisher guten Ergebnisse mögen ein Festhalten an den bisherigen verwendeten Formen, insbesondere der Ellipsenform, begründet haben.

Mittels der genannten Form können die wirkenden Betriebskräfte und Betriebsmomente zum einen zuverlässig aufgenommen werden sowie das Verschrauben besser gelingen, und zum anderen kann eine einfach konstruierbare Gewindeform, deren Herstellung bzw. Fertigung überraschend ohne größere Schwierigkeiten durchgeführt werden kann, verwendet werden.

Gerade für ein konisches Gewinde wurde erfindungsgemäß erkannt, dass eine als "Vorspannung" wahrnehmbare Kraft vorhanden ist, da zwischen Gewindebuchse und Gewindestecker beim anfänglichen Verschrauben ein Spalt vorhanden ist, obwohl die Gewinde von Gewindebuchse und Gewindestecker bereits deckungsgleich aufeinanderliegen. Bei einem weiteren Verschrauben wird eine resultierende Normalkraft erzeugt, welche die Reibkraft im Gewinde vergrößert. Dies kann dazu führen, dass ein Teil des Verschraubmoments durch die Reibung aufgenommen wird. Die schon beim anfänglichen Verschrauben vorhandene Überdeckung kann zu einem Gleiten von Gewindebuchse und Gewindestecker zueinander führen, da die "Vorspannung" in axialer Richtung eine radiale Bewegung durch den Konuswinkel hervorruft. Damit auch das Gleiten möglichst mit großflächiger Anlage stattfinden kann, um die Flächenpressung entsprechend zu verteilen, wurde erkannt, die Form des Gewindes mit einem wesentlichen Abschnitt in der Gewindehöhe auszugestalten, dessen Tangenten in dem Bereich einen Winkel mit einer Verbindungslinie benachbarter Gewindegründe bzw. Gewindespitzen einschließen, der größer als 45° ist. Der Bereich mit einer "Steigung" von größer als 45° weist eine Höhe auf, die mindestens dem 0,3-fachen der Gewindehöhe entspricht, wobei mit der Steigung ein Winkel des Abschnitts der Funktion bezeichnet ist, den eine Tangente am Punkt der Funktion mit einer Verbindungslinie benachbarter Gewindegründe bzw. Gewindespitzen einschließt.

Durch die beschriebene Form ist es bspw. möglich, dass über einen längeren Bereich eine größere Steigung bzw. ein größerer Winkel vorliegt als bspw. bei einer Ellipse, an den zur Anlage des Gewindes kommenden Flächen, insbesondere in dem Bereich mit einer Steigung von größer als 45°, erreicht werden kann. Eine Fertigung ist trotz bisherigen Vorbehalts zu einer derartigen Form einfach möglich. Die Form kann auch bei der Konstruktion einfach geplant werden. Ein Ausdehnen auf den Gewindegrund vor dem Hintergrund einer Verbesserung bzw. Reduzierung von Spannungen im Gewindegrund kann aufgrund der beschriebenen Form erreicht werden, während eine Ellipse nur eine geringere Gestaltungsmöglichkeit zulässt.

Die Erfindung schafft einen Gewindestecker an einem langgestreckten Körper für eine Gewindeverbindung mit einer Gewindebuchse, wobei der Gewindestecker ein konisches Außengewinde aufweist, bei dem ein Abschnitt einer Flanke des Außengewindes als Abschnitt einer Funktion darstellbar ist, die eine Krümmung aufweist, wobei der Abschnitt der Funktion über mindestens eine Höhe des 0,3-fachen der Gewindehöhe einen Winkel zu einer Verbindungslinie benachbarter Gewindegründe bzw. Gewindespitzen aufweist, der größer als 45° ist.

Der Begriff "konisches (Innen- oder Außen-)Gewinde" umfasst eine Ausgestaltung des (Innen- oder Außen-)Gewindes derart, dass die Gewindegründe und/oder die Gewindespitzen des Gewindesteckers bzw. der Gewindebuchse einen Mantel definieren, der eine konische Form aufweist. Dies erlaubt ein einfaches und schnelles Verschrauben des Gewindesteckers mit der Gewindebuchse, wobei vorzugsweise sowohl Gewindestecker als auch Gewindebuchse ein konisches Gewinde aufweisen. Vorzugsweise kann der Winkel den der Mantel, auf dem die Gewindegründe und/oder Gewindespitzen liegen, mit einer Parallelen zu der Längsachse des Gewindesteckers bzw. der Gewindebuchse einen Winkel (Konuswinkel) einschließt, im Bereich zwischen 2° und 15°, insbesondere 2° bis 12°, insbesondere 3° und 12°, weiter bevorzugt 3° bis 10°, weiter bevorzugt 3° bis 8°, weiter bevorzugt 3° und 7°, liegen.

Es ist möglich, dass zur Betrachtung des Konus nicht alle Gewindegründe und/oder Gewindespitzen berücksichtigt werden, sondern bspw. nur zwei oder mehr benachbarte Gewindespitzen und/oder Gewindegründe. Auf diese Weise kann eine leichte Variation des Konus und/oder Fertigungstoleranzen über die Länge in Richtung der Längsachse des langgestreckten Körpers berücksichtigt werden. Es ist auch möglich, dass alle Gewindegründe und/oder Gewindespitzen auf einem Mantel bzw. Konus liegen.

Eine Betrachtung der Form des Gewindes erfolgt in der Regel im Sinne der Beschreibung in einer Schnittdarstellung, bei der der Gewindestecker bzw. auch analog die Gewindebuchse durch eine Schnittebene geschnitten wird, die die Längsachse des langgestreckten Körpers schneidet bzw. die die Längsachse enthält. Hierdurch kann die Betrachtung in einer zweidimensionalen Darstellung erfolgen, so dass sich der Konuswinkel aus einer Verbindungslinie der Gewindegründe bzw. der Gewindespitzen in der Schnittdarstellung ergeben kann; es kann vorgesehen sein, dass der Konuswinkel (lokal) durch eine Verbindungslinie benachbarter Gewindegründe bzw. benachbarter Gewindespitzen gegeben ist..

Im Sinne der Beschreibung umfasst der Begriff "Flanke" des Gewindes im Wesentlichen den Bereich bzw. Abschnitt des Gewindes zwischen Gewindegrund und benachbarter Gewindespitze und umgekehrt. Aufgrund der gekrümmten Ausbildung des Abschnitts der Flanke kann es vorgesehen sein, dass die Zuordnung der Bereiche des "Gewindegrunds" und der "Gewindespitze" nicht zwingend auf einen Punkt zu reduzieren sind, da Gewindegrund und/oder Gewindespitze beispielsweise ein Plateau bzw. einen Bereich mit sehr geringer Steigung aufweisen. Die Begriffe "Gewindegrund" und "Gewindespitze" werden nachfolgend noch weiter beschrieben.

Im Sinne der Beschreibung umfasst der Begriff "Abschnitt einer Flanke" einen Teilbereich bzw. Abschnitt des Gewindes zwischen einem Gewindegrund und einer benachbarten Gewindespitze und umgekehrt.

Im Sinne der Beschreibung umfasst der Begriff "Abschnitt einer Funktion" einen Funktionsverlauf bzw. (Funktions-)Graph über einen Argument- bzw. Wertebereich. Der Begriff "Abschnitt einer Funktion" umfasst einen Bereich einer mittels einer, insbesondere mathematischen, Funktion beschriebenen Kurve.

Der Begriff "Gewindegrund" kann im Sinne der Beschreibung den tiefsten Punkt zwischen zwei benachbarten Gewindespitzen umfassen, von dem sich insbesondere eine Flanke jeweils bis zu einer der beiden benachbarten Gewindespitzen kann. Sofern der tiefste Punkt zwischen zwei benachbarten Gewindespitzen als vom Gewindegrund umfasst bezeichnet wird, so muss der Gewindegrund im Sinne der Beschreibung nicht auf einen einzelnen Punkt, insbesondere den tiefsten Punkt zwischen zwei Gewindespitzen, reduziert werden. Vielmehr kann sich ein Gewindegrund im Sinne der Beschreibung über einen Bereich erstrecken, der ausgedehnt in Richtung der Längsachse des langgestreckten Körpers bzw. des Gewindesteckers bzw. der Gewindebuchse ist und den tiefsten Punkt zwischen zwei benachbarten Gewindespitzen umfassen kann. Der Gewindegrund kann plateauförmig oder als Plateau ausgebildet sein, wobei eine leichte bzw. geringfügige Krümmung vorhanden sein kann. Eine punktuelle oder nahezu punktuelle Ausgestaltung des Gewindegrunds ist nicht ausgeschlossen; insbesondere bei einer punktuellen bzw. nahezu punktuellen Ausgestaltung kann vorgesehen sein, dass sich an den derart ausgestalteten Gewindegrund eine Form zur Ausbildung einer Flanke anschließt, die beispielsweise durch den Abschnitt der Funktion, einen Kreisradius oder andere Parameter festgelegt werden kann. Es kann vorgesehen sein, dass der Gewindegrund den Punkt angibt an dem sich eine tragende und eine nichttragende Flanke treffen.

Der Begriff "Gewindespitze" kann im Sinne der Beschreibung den höchsten Punkt zwischen zwei benachbarten Gewindegründen umfassen. Sofern der höchste Punkt zwischen zwei benachbarten Gewindegründen als von der Gewindespitze umfasst bezeichnet wird, so muss die Gewindespitze im Sinne der Beschreibung nicht auf einen einzelnen Punkt, insbesondere den höchsten Punkt zwischen zwei Gewindegründen, reduziert werden. Vielmehr kann sich eine Gewindespitze im Sinne der Beschreibung über einen Bereich erstrecken, der ausgedehnt in Richtung der Längsachse des langgestreckten Körpers bzw. des Gewindesteckers bzw. der Gewindebuchse ist und den höchsten Punkt zwischen zwei benachbarten Gewindegründen umfassen kann. Die Gewindespitze kann plateauförmig oder als Plateau ausgebildet sein, wobei eine leichte bzw. geringfügige Krümmung vorhanden sein kann. Nicht ausgeschlossen ist eine punktuelle oder nahezu punktuelle Ausgestaltung der Gewindespitze; insbesondere bei einer punktuellen bzw. nahezu punktuellen Ausgestaltung kann vorgesehen sein, dass sich an die derart ausgestaltete Gewindespitze eine Form zur Ausbildung einer Flanke anschließt, die beispielsweise durch den Abschnitt der Funktion, einen Kreisradius oder andere Parameter festgelegt werden kann. Es kann vorgesehen sein, dass ein Bereich zur Gewindespitze gezählt wird, der sich von einem höchsten Punkt bis zu einem Wendepunkt in der Flanke erstrecken kann. Es kann auch vorgesehen sein, dass sich eine Flanke von der Gewindespitze in einem Abschnitt einer Kreisform, insbesondere einem Abschnitt eines Kreises mit einem Radius, bis zum Abschnitt der Funktion erstreckt, so dass der Abschnitt der Kreisform, insbesondere der Abschnitt eines Kreises mit einem Radius, an den Abschnitt der Funktion unmittelbar anschließen kann. Es kann vorgesehen sein, dass die Gewindespitze den Punkt angibt, an dem sich eine tragende und eine nicht-tragende Flanke treffen.

Zur Beschreibung der Funktion kann eine X-Achse so gelegt bzw. positioniert werden, dass die X-Achse im Wesentlichen eine Verbindungslinie der Gewindegründe ist. Es ist bevorzugt, die X-Achse derart zu legen bzw. zu positionieren, dass die X-Achse im Wesentlichen mit der Längsachse des langgestreckten Körpers zusammenfällt oder zu dieser parallel verläuft. In beiden Fällen kann die Konstruktion, Herstellung und/oder Planung vereinfacht werden. Im letztgenannten Fall ist es auch nicht notwendig, eine Funktion um eine Achse zu verkippen, sondern es kann die Funktion als solche verwendet werden.

Der Begriff "(Gewinde-)Höhe" zur Beschreibung des Gewindes umfasst die Angabe einer Distanz bzw. Länge bezogen auf eine Schnittebene zur Betrachtung des Gewindes, die die Längsachse des langgestreckten Körpers enthalten kann. Die (Gewinde-)Höhe kann sich aus einer Länge bzw. Distanz zwischen Gewindegrund und benachbarten Gewindespitzen ergeben, wobei ein Konus, auf dem die Gewindespitzen angeordnet sind, berücksichtigt werden kann. Es kann vorgesehen sein, dass zur Ermittlung der Gewindehöhe das Lot von einer die Gewindespitzen verbindenden Verbindungslinie auf den Gewindegrund bzw. eine Verbindungslinie benachbarter Gewindegründe gefällt wird.

Im Sinne der Beschreibung wird für die Betrachtung des Winkels, den die Flanke bzw. die Funktion mit der Verbindungslinie benachbarter Gewindegründe bzw. Gewindespitzen aufweist, eine Tangente in dem jeweiligen Punkt der Flanke bzw. der Funktion betrachtet.

Es kann vorgesehen sein, dass der Abschnitt der Funktion die Flanke über einen großen Bereich bezogen auf die Längsachse des langgestreckten Körpers bzw. des Gewindesteckers bzw. Gewindebuchse beschreibt. Es kann vorgesehen sein, dass die Flanke im Wesentlichen bis auf Abrundungen, "Ergänzungsstücke" und/oder "Verbindungsbereiche" den Abschnitt der Funktion aufweist. Der Abschnitt der Funktion kann einen wesentlichen Teil der Flanke ausbilden. Es kann vorgesehen sein, dass ein sich an den Abschnitt der Funktion anschließender Bereich möglichst klein ausgestaltet ist.

Es ist möglich, dass sich der Abschnitt der Funktion bis in den Gewindegrund erstreckt. Es ist möglich, dass der Abschnitt der Funktion den Gewindegrund für die entsprechende Flanke beschreibt, an den sich insbesondere die zum Gewindegrund benachbarte, weitere Flanke anschließen kann. Der Teil des Gewindegrunds der Flanke, den der Abschnitt der Funktion betrifft, kann als der Abschnitt der Funktion ausgestaltet sein. An den Gewindegrund, bis zu dem sich der mittels des Abschnitts der Funktion beschriebene Abschnitt der Flanke erstrecken kann, kann für die benachbarte Flanke mit demselben Gewindegrund eine andere Form vorgesehen sein; beispielsweise kann der Abschnitt der Funktion an die andere Form im Gewindegrund anschließen. Insbesondere kann die benachbarte Flanke nicht-spiegelsymmetrisch zur Flanke mit dem Abschnitt der Funktion ausgestaltet sein. Es kann vorgesehen sein, dass sich der Abschnitt der Funktion von dem Bereich mit einem Winkel größer als 45° bis auf den Gewindegrund ausdehnen bzw. erstrecken kann. Es ist aber auch möglich, für den Gewindegrund bzw. den Bereich um den Gewindegrund eine andere Form als den Abschnitt der Funktion vorzusehen.

Sofern beschrieben ist, dass ein Abschnitt der Flanke als Abschnitt einer Funktion ausgebildet ist, so wird im Sinne der Beschreibung in einer bevorzugten Ausführungsform darunter verstanden, dass der Abschnitt der Flanke genau den Abschnitt der Funktion aufweist und keine weitere Form. Es kann vorgesehen sein, dass sich das Gewinde zwischen zwei benachbarten Gewindespitzen aus mehreren Abschnitten von mehr als einer Funktion zusammensetzen kann.

Die Form des Gewindegrundes und der Gewindespitze können von dem Abschnitt der Funktion, einem weiteren Abschnitt einer weiteren Funktion bzw. Form oder mehreren Abschnitten von weiteren Funktionen oder Formen ausgebildet sein. Es ist möglich, dass Gewindegrund und/oder Gewindespitze insbesondere direkt im Anschluss an den Abschnitt der Funktion eine Form aufweisen, die insbesondere durch eine mathematisch beschreibbare Form, bevorzugt einen kreisförmigen Abschnitt, weiter bevorzugt einen Kreisabschnitt, beschrieben werden kann.

In einer bevorzugten Ausführungsform weist der Abschnitt der Funktion über eine Höhe des mindestens 0,35-fachen, insbesondere des mindestens 0,4-fachen, insbesondere des mindestens 0,45-fachen, insbesondere des mindestens 0,5-fachen, insbesondere des mindestens 0,55-fachen, insbesondere des mindestens 0,6-fachen, insbesondere des mindestens 0,65-fachen, insbesondere des mindestens 0,7-fachen, insbesondere des mindestens 0,75-fachen, der Gewindehöhe einen Winkel zu einer Verbindungslinie benachbarter Gewindegründe bzw. Gewindespitzen auf, der größer als 45° ist. Hierdurch kann der erfindungsgemäße Effekt variiert, insbesondere gesteigert, werden.

Es kann vorgesehen sein, dass ein Winkel des Abschnitts der Funktion nicht größer als 75°, insbesondere nicht größer als 70°, insbesondere nicht größer als 65°, ist. Insofern kann der Abschnitt der Funktion dahingehend eingeschränkt sein, dass der Abschnitt der Funktion über eine Höhe des mindestens 0,3-fachen, insbesondere des mindestens 0,35-fachen, insbesondere des mindestens 0,4-fachen, insbesondere des mindestens 0,45-fachen, insbesondere des mindestens 0,5-fachen, insbesondere des mindestens 0,55-fachen, insbesondere des 0,5-fachen, insbesondere des mindestens 0,6-fachen, insbesondere des mindestens 0,65-fachen, insbesondere des mindestens 0,7-fachen, insbesondere des mindestens 0,75-fachen, der Gewindehöhe einen Winkel zu einer Verbindungslinie benachbarter Gewindegründe bzw. Gewindespitzen aufweist, der größer als 45° und kleiner als 75°, insbesondere kleiner als 70°, insbesondere kleiner als 65°, ist. Der Abschnitt der Funktion kann über die betrachtete relative Gewindehöhe monoton steigend ausgestaltet sein. Eine Ableitung des Abschnitts der Funktion kann über die betrachtete relative Gewindehöhe monoton steigend ausgestaltet sein. Es kann mittels des Abschnitts der Funktion ein großer Bereich im Hinblick auf die Gewindehöhe geschaffen werden, in dem der Winkel sich über maximal 20°, insbesondere maximal 25°, insbesondere maximal 30° ändert. Ein Kontaktwinkel kann gewählt werden, der zwar variiert werden kann bzw. durch die Funktion variiert wird, aber über einen Wesentlichen Bereich bleibt der Kontaktwinkel in einem angestrebten Bereich. Konstruktion und Handhabung können verbessert werden.

In einer bevorzugten Ausführungsform erstreckt sich ein Längenbereich des Abschnitts der Funktion, der einen Winkel zu einer Verbindungslinie benachbarter Gewindegründe bzw. Gewindespitzen aufweist, der größer als 45° ist, über eine Länge zwischen Gewindegrund und Gewindespitze, die das 0,1-fache der Länge zwischen Gewindegrund und Gewindespitze der Flanke ist, deren Abschnitt durch den Abschnitt der Funktion darstellbar ist. Hierdurch kann nicht nur eine Höhe des beschriebenen Bereichs berücksichtigt werden, sondern auch eine Länge, die entsprechend variiert, insbesondere gesteigert, werden kann. In einer besonders bevorzugten Ausführungsform kann sich der Längenbereich des Abschnitts der Funktion, der einen Winkel zu einer Verbindungslinie benachbarter Gewindegründe bzw. Gewindespitzen aufweist, der größer als 45° ist, über eine Länge zwischen Gewindegrund und Gewindespitze erstrecken, die das 0,15-fache, insbesondere das 0,2-fache, insbesondere das 0,25-fache, der Länge zwischen Gewindegrund und Gewindespitze der Flanke ist, deren Abschnitt durch den Abschnitt der Funktion darstellbar ist.

In dem vorgenannten Längenbereich kann der Winkel bis auf maximal 75°, insbesondere maximal 70°, insbesondere maximal 65°, insbesondere maximal 60°, variieren, wobei eine vorgenannte Ausgestaltung im Hinblick auf monoton steigenden Verlauf des Abschnitts der Funktion und monoton ansteigenden Verlauf der Ableitung des Abschnitts der Funktion vorgesehen sein kann.

Im Sinne der Beschreibung umfasst der Begriff "Längenbereich" einen Bereich, der sich in Richtung bzw. entlang einer Längsachse des langgestreckten Körpers, des Gewindesteckers bzw. der Gewindebuchse, oder insbesondere entlang einer Verbindungslinie benachbarter Gewindegründe bzw. Gewindespitzen erstreckt. Sofern hinsichtlich des Längenbereichs eine Längsachse bzw. Verbindungslinie beschrieben ist, so bezeichnet der Begriff "in Richtung" bzw. "entlang" eine Richtung im Wesentlichen parallel zu der Längsachse bzw. der Verbindungslinie. Sofern eine Gewindespitze als Plateau ausgestaltet ist, so kann die Gewindespitze zur Festlegung einer Länge derart auf bzw. an dem Plateau positioniert bzw. angeordnet oder definiert werden, dass die Gewindespitze ein Punkt der Flanke ist, der den Rand des Plateaus beschreibt (den ersten Punkt, der auf dem Niveau des Plateaus ist). Die Wahl der Länge des Plateaus kann vorteilhaft gewählt werden.

In einer bevorzugten Ausführungsform erstreckt sich der Abschnitt der Funktion in einem Bereich um die Mitte in der Gewindehöhe, der mindestens das 0,2-fache der Gewindehöhe aufweist, wobei der Bereich ausgestaltet ist, dass sich der Winkel des Abschnitts der Funktion in dem Bereich zu einer Verbindungslinie benachbarter Gewindegründe bzw. Gewindespitzen um weniger als 20°, insbesondere 15°, ändert. Hierdurch kann der Kerngedanke weiter unterstützt werden. Der vorgenannte Bereich kann in einer besonders bevorzugten Ausführungsform mindestens das 0,25-fache, insbesondere das 0,3-fache, insbesondere das 0,35-fache, insbesondere das 0,4-fache, insbesondere das 0,45-fache, insbesondere das 0,5-fache, insbesondere das 0,55-fache, insbesondere das 0,6-fache, der Gewindehöhe betragen.

Bei der Betrachtung des Abschnitts der Funktion in einem Bereich um die Mitte der Gewindehöhe, so wird hierbei die Mitte festgestellt und geschaut, wie weit sich der Abschnitt der Funktion sowohl zum Gewindegrund als auch zur Gewindespitze bezogen auf die Gewindehöhe von der Mitte erstreckt. Das geringere Maß der Erstreckung von Mitte bis Gewindespitze bzw. Mitte bis Gewindegrund wird mit zwei multipliziert. Die gewählte Betrachtung kann einer asymmetrischen Anordnung des Abschnitts der Flanke Rechnung tragen. Beispielsweise kann die Höhe des Abschnitts, der sich an die Funktion zum Gewindegrund anschließt deutlich kleiner - oder gar nicht vorhanden - sein als die Höhe des Abschnitts, der sich in Richtung der Gewindespitze anschließen kann.

In dem vorgenannten Bereich der Gewindehöhe kann der Winkel bis auf maximal 75°, insbesondere maximal 70°, insbesondere maximal 65°, variieren, wobei eine vorgenannte Ausgestaltung im Hinblick auf monoton steigenden Verlauf des Abschnitts der Funktion und monoton ansteigenden Verlauf der Ableitung des Abschnitts der Funktion vorgesehen sein kann.

Es kann vorgesehen sein, dass sich die Angaben zur Erstreckung des Abschnitts der Flanke, die mittels der Funktion beschrieben werden kann, derart ergänzen, dass sich die Funktion über einen Längenbereich und eine Gewindehöhe erstreckt, so dass sich ein Verhältnis aus Erstreckung über Gewindehöhe und Erstreckung über Längenbereich ergibt, welches im Bereich von 1 bis 4 liegt. Hier kann ein synergistischer Effekt vorliegen, indem das Erstreckungsverhältnis mit dem Winkel, der mit der Funktion für eine Kontaktausbildung erreicht wird, korreliert wird.

Es kann ein Verhältnis aus Erstreckung über Gewindehöhe und Erstreckung über Längenbereich ergibt, gewählt werden, welches insbesondere im Bereich von 1 bis 4, weiter bevorzugt 1,2 bis 4, weiter bevorzugt 1,3 bis 3,9, weiter bevorzugt 1,3 bis 3,8, weiter bevorzugt 1,3 bis 3,7, weiter bevorzugt 1,3 bis 3,6, weiter bevorzugt 1,3 bis 3,5, weiter bevorzugt 1,3 bis 3,4, weiter bevorzugt 1,3 bis 3,3, weiter bevorzugt 1,3 bis 3,2, weiter bevorzugt 1,3 bis 3,1, weiter bevorzugt 1,3 bis 3,0, weiter bevorzugt 1,3 bis 2,9, weiter bevorzugt 1,3 bis 2,8, weiter bevorzugt 1,3 bis 2,7, weiter bevorzugt 1,3 bis 2,6, weiter bevorzugt 1,3 bis 2,5, weiter bevorzugt 1,3 bis 2,4, weiter bevorzugt 1,3 bis 2,3, weiter bevorzugt 1,3 bis 2,2, weiter bevorzugt 1,3 bis 2,1, weiter bevorzugt 1,3 bis 2,0, weiter bevorzugt 1,4 bis 2,0, weiter bevorzugt 1,5 bis 2,0, ist. Es kann vorgesehen sein, dass das Verhältnis 1,0 mit 45°, das Verhältnis 4,0 mit 75°, das Verhältnis 1,5 mit 56° und das Verhältnis 2,0 mit 63° korreliert ist.

In einer bevorzugten Ausführungsform erstreckt sich die Flanke über eine Länge vom Gewindegrund in Richtung einer Gewindespitze über einen Bereich, in dem der Winkel zu einer Verbindungslinie benachbarter Gewindegründe bzw. Gewindespitzen kleiner als 20° ist, der größer als das 0,1-fache, insbesondere das 0,15-fache, insbesondere das 0,2-fache, insbesondere das 0,25-fache, insbesondere das 0,3-fache, insbesondere das 0,35-fache, insbesondere das 0,4-fache, der Länge zwischen Gewindegrund und Gewindespitze der Flanke ist, deren Abschnitt durch den Abschnitt der Funktion darstellbar ist. Hierdurch kann der Kerngedanke der Erfindung verbessert bzw. noch verstärkt werden, indem der Kerbwirkung am Gewindegrund entgegengewirkt werden kann. Es kann sich ein synergistischer Effekt ergeben.

In einer bevorzugten Ausführungsform erstreckt sich der Abschnitt der Funktion bis in den Bereich des Gewindegrunds, insbesondere bis in den Gewindegrund, wobei die Funktion die in der Beschreibung beschriebenen Eigenschaften verkörpern kann. Hierdurch kann sich ein synergistischer Effekt ergeben, dass mit der Funktion die beschriebenen Eigenschaften realisiert werden können, wodurch eine gute Planung bzw. Konstruktion und eine gute Herstellbarkeit ermöglicht werden können.

In einer bevorzugten Ausführungsform ist die Krümmung nach innen gewölbt, wodurch an der bisher für die Ellipsenform ausgestaltet nach innen gerichtete Krümmung konzeptionell festgehalten werden kann.

Im Sinne der Beschreibung ist unter dem Begriff "nach innen gewölbt" bzw. "nach innen gekrümmt" bzw. "konvex" eine Ausgestaltung zu verstehen, bei der die Form derart ist, dass die Form unterhalb einer bzw. jeder Strecke einer Verbindung zwischen zwei Punkten der Form liegt.

In einer bevorzugten Ausführungsform weist die Flanke, deren Abschnitt als Abschnitt der Funktion darstellbar ist, den Abschnitt der Funktion und eine weitere Form auf, die den Abschnitt der Flanke mit der Gewindespitze verbindet. Hierdurch kann eine gewisse Variabilität erreicht werden. Es kann vorgesehen sein, dass die Flanke neben dem Abschnitt der Funktion weitere, unterschiedliche Bereiche bzw. Formen aufweisen kann. Es kann vorgesehen sein, dass die Flanke genau den einen Abschnitt der Funktion und genau eine weitere Form aufweist bzw. hieraus besteht. Eine einfache Planung bzw. Konstruktion ist neben einer guten Herstellbarkeit möglich.

In einer bevorzugten Ausführungsform ist der Abschnitt der Funktion stetig. Hierdurch kann einer Kerbwirkung entgegengewirkt werden. Auch ist durch den stetigen Verlauf eine simple Konstruktion mit einer guten Herstellung möglich.

Es kann vorgesehen sein, dass der Abschnitt der Funktion ein Abschnitt einer hyperbelförmigen Funktion ist. Insbesondere kann die hyperbelförmige Funktion um ungefähr 45°, insbesondere 45° verringert um den Konuswinkel, gedreht sein.

In einer bevorzugten Ausführungsform ist die Funktion eine Potenzfunktion mit einem Exponenten kleiner 1 und einer Basis mit einem potenzierten Argument. Derartige Funktionen sind trotz einer überraschenden Verwendung auf diesem Gebiet gut bekannt und in gewissem Bereich derart variierbar, dass sehr gute Ergebnisse erzielt werden können.

Im Sinne der Beschreibung umfasst der Begriff Potenzfunktion mit einem Exponenten kleiner 1 grundsätzlich eine Funktion der Form

$$f1(x) = (Faktor*x\text{^}Potenz +/- Anpassung)\text{^}Exponent +/- Verschiebung,$$

wobei

Faktor eine reelle Zahl,
Potenz eine reelle Zahl,
Anpassung eine reelle Zahl,
Exponent eine reelle Zahl kleiner als 1 und
Verschiebung eine reelle Zahl ist.

In einer bevorzugten Ausführungsform liegt der Exponent im Bereich von 0,2 bis 0,7, insbesondere von 0,3 bis 0,6, und/oder die Basis, die potenziert wird, weist einen Term auf, bei dem das Argument mit einer Potenz potenziert ist, die im Bereich zwischen 2,5 und 5,8, insbesondere zwischen 2,7 und 5,6, insbesondere zwischen 2,9 und 5,4, liegt. Hierdurch kann eine Funktion verwendet werden, die verhältnismäßig einfach aufgebaut ist und dennoch eine Ausgestaltung und/oder Variabilität zulässt, die den Kerngedanken der Erfindung unterstreicht bzw. unterstützt.

Die Flanken des Gewindes können in tragende Flanken und nicht-tragende Flanken unterschieden werden. Die tragenden Flanken sind für die Kraftübertragung vom Gewindestecker auf die Gewindebuchse zuständig. Eine tragende Flanke ist zu einer nicht-tragenden Flanke unmittelbar benachbart, d.h. eine tragende und eine benachbarte, nicht-tragende Flanke sind mittels genau eines zwischen ihnen angeordneten Gewindegrundes oder einer zwischen ihnen angeordneten Gewindespitze miteinander verbunden.

In einer bevorzugten Ausführungsform ist die Flanke eine tragende Flanke. Es kann ermöglicht werden, dass zwischen einer tragenden Flanke und einer nicht-tragenden Flanke unterschieden werden kann, wodurch eine den Kerngedanken der Erfindung unterstützende Ausgestaltung weiter verbessert werden kann. Insbesondere kann für die tragende Flanke eine andere Ausgestaltung gewählt werden als für die nichttragende Flanke.

In einem selbstständig die Erfindung tragenden Aspekt kann ein Gewindestecker an einem langgestreckten Körper für eine Gewindeverbindung mit einer Gewindebuchse geschaffen werden. Der Gewindestecker weist ein konisches Außengewinde auf, und kann wir vorstehend ausgestaltet sein, es kann aber auch besonders bevorzugt eine zunächst unabhängige Ausgestaltung betrachtet werden, wobei eine nicht-tragende Flanke des Gewindes einen Abschnitt einer Funktion aufweist, die über einen Bereich um die Mitte zwischen Gewindegrund und Gewindespitze nach außen gekrümmt ist. Es wurde erkannt, dass eine nicht-tragende Flanke anderen Anforderungen genügen kann und somit eine nicht einfach symmetrische Ausgestaltung des Gewindes vorgesehen sein kann, bei der insbesondere die nicht-tragende Flanke des Gewindes des Gewindesteckers einen nach außen gekrümmten Bereich aufweisen kann.

Ein nach außen gekrümmter Bereich stellt hinsichtlich der bisherigen herrschenden Meinung eine Abkehr von der sonst üblichen Form dar, da eine nach innen gewölbte Form bisher vorgesehen war.

In einer bevorzugten Ausführungsform weist die Funktion des Abschnitts der Funktion für die nicht-tragende Flanke einen Logarithmus auf.

Im Sinne der Beschreibung wird unter einer Funktion, die einen Logarithmus aufweist, eine Funktion verstanden, die einen logarithmusförmigen Verlauf aufweist bzw. einen Abschnitt einer logarithmischen Spirale aufweist.

In einer bevorzugten Ausführungsform erstreckt sich der Abschnitt der Funktion für die nicht-tragende Flanke über eine Höhe des mindestens 0,35-fachen, insbesondere des mindestens 0,4-fachen, insbesondere des mindestens 0,45-fachen, insbesondere des mindestens 0,5-fachen, insbesondere des mindestens 0,55-fachen, insbesondere des mindestens 0,6-fachen, insbesondere des mindestens 0,65-fachen, insbesondere des mindestens 0,7-fachen, der Gewindehöhe, wodurch die Konstruktion, die Herstellbarkeit und/oder die Verwendung verbessert werden kann. Die vorteilhafte Eigenschaft kann sich über einen großen Bereich der Gewindehöhe erstrecken.

In einer bevorzugten Ausführungsform erstreckt sich ein Längenbereich des Abschnitts der Funktion für die nicht-tragende Flanke über eine Länge zwischen Gewindegrund und Gewindespitze, die das 0,2-fache der Länge zwischen Gewindegrund und Gewindespitze der Flanke ist, deren Abschnitt durch den Abschnitt der Funktion der nicht-tragenden Flanke darstellbar ist. Hierdurch kann nicht nur eine Höhe des beschriebenen Bereichs berücksichtigt werden, sondern auch eine Länge, die entsprechend variiert, insbesondere gesteigert, werden kann. In einer besonders bevorzugten Ausführungsform kann sich der Längenbereich des Abschnitts der Funktion der nicht-tragenden Flanke über eine Länge zwischen Gewindegrund und Gewindespitze erstrecken, die das 0,25-fache, insbesondere das 0,3-fache, insbesondere das 0,35-fache, insbesondere das 0,4-fache, insbesondere das 0,45-fache, der Länge zwischen Gewindegrund und Gewindespitze der nicht-tragenden Flanke ist.

In einer bevorzugten Ausführungsform erstreckt sich der Abschnitt der Funktion der nicht-tragenden Flanke in einem Bereich um die Mitte in der Gewindehöhe, der mindestens das 0,25-fache der Gewindehöhe aufweist. Der vorgenannte Bereich kann in einer besonders bevorzugten Ausführungsform mindestens das 0,3-fache, insbesondere das 0,35-fache, insbesondere das 0,4-fache, insbesondere das 0,45-fache, insbesondere das 0,5-fache, der Gewindehöhe betragen.

Bei einer Betrachtung des Abschnitts der Funktion für die nicht-tragende Flanke wird dieselbe Vorgehensweise wie bei der oben diskutierten, insbesondere tragenden, Flanke zugrundegelegt. Die Mitte wird festgestellt und geschaut, wie weit sich der Abschnitt der Funktion sowohl zum Gewindegrund als auch zur Gewindespitze bezogen auf die Gewindehöhe von der Mitte erstreckt. Das geringere Maß der Erstreckung von Mitte bis Gewindespitze bzw. Mitte bis Gewindegrund wird mit zwei multipliziert.

In einer besonders bevorzugten Ausführungsform wird unter einer "Funktion, die einen Logarithmus aufweist", eine Funktion verstanden, bei der das Argument, welches (Bestand-)Teil eines Terms sein kann, logarithmiert wird. Ein Logarithmus mit einer beliebigen Basis ist ebenso möglich wie ein dekadischer oder natürlicher Logarithmus.

Es kann vorgesehen sein, dass die Funktion, die einen Logarithmus aufweist, eine grundsätzliche Form aufweist, die durch

$$f2(x) = \text{Multiplikator1} * \ln (+/- \text{Multiplikator2} * x + \text{Verschiebung1}) + \text{Verschiebung2}$$

gegeben sein kann,
wobei

Multiplikator1 eine reelle Zahl,
Multiplikator2 eine reelle Zahl,
Verschiebung1 eine reelle Zahl, und
Verschiebung2 eine reelle Zahl ist.

In einer bevorzugten Ausführungsform beginnt der Abschnitt der Funktion der nichttragenden Flanke in einem Abstand zum Gewindegrund und der Abstand zwischen Gewindegrund und Beginn des Abschnitts der Funktion wird mittels eines bogenförmigen, insbesondere eine kreisbogenförmigen, Abschnitts, der ganz besonders bevorzugt ein Kreisbogen ist, überbrückt. Hierdurch kann eine einfache Ausgestaltung mit einer relativ einfachen Funktion verwendet werden, der eine Variabilität ermöglicht, um eine Anpassung bzw. auch einen Kompromiss an unterschiedliche Anforderungen zu ermöglichen.

In einer besonders bevorzugten Ausführungsform ist bei der nicht-tragenden Flanke vom Gewindegrund ein kreisbogenförmiger Abschnitt, insbesondere ein Kreisbogensegment, vorhanden, an die sich der Abschnitt der Funktion anschließt. In einer besonders bevorzugten Ausführungsform schließt sich an den Abschnitt der Funktion für die nicht-tragende Flanke ein kreisbogenförmiger Abschnitt, insbesondere ein Kreisbogensegment, an, der sich bis zur Gewindespitze erstreckt. In einer besonders bevorzugten Ausführungsform kann die nicht-tragende Flanke mittels des Abschnitts der Funktion, eines kreisbogenförmigen Abschnitts, insbesondere eines Kreisbogensegments, welcher sich von dem Abschnitt der Funktion bis zum Gewindegrund erstreckt, und eines kreisbogenförmigen Abschnitts, insbesondere eines Kreisbogensegments, welcher sich von dem Abschnitt der Funktion bis zur Gewindespitze erstreckt, dargestellt bzw. beschrieben werden.

In einer besonders bevorzugten Ausführungsform kann ein Gewinde zwischen zwei benachbarten Gewindegründen bzw. zwei benachbarten Gewindespitzen eine in der Beschreibung beschriebene tragende Flanke und eine in der Beschreibung beschriebene nicht-tragende Flanke aufweisen. Hierdurch kann sich ein synergistischer Effekt ergeben.

Es ist möglich, dass sich durch die Ausgestaltung des Gewindes mit der beschriebenen nicht-tragenden Flanke und der beschriebenen tragenden Flanke ein synergistischer Effekt ergibt, der das Gleiten verbessert. Es kann alternativ oder zusätzlich erreicht werden, dass Fluchtungsfehler maschinenbedingt ausgeglichen werden können. Alternativ oder zusätzlich kann beim Einschrauben eine bessere Zentrierung ermöglicht werden.

In einer bevorzugten Ausführungsform ist der langgestreckte Körper ein Gestängeschuss eines Bohrstrangs für eine Erdbohrvorrichtung oder ein Antriebselement für einen Gestängeschuss eines Bohrstrangs einer Erdbohrvorrichtung ist. Hierdurch können die beschriebenen Ausführungsformen von Gewindestecker und/oder Gewindebuchse in einem Bereich eingesetzt werden, der hohen Anforderungen gerecht werden muss. Insbesondere kann in dem genannten Gebiet mit den hohen Belastungen eine erhöhte Standfestigkeit und Haltbarkeit ermöglicht werden.

Der Begriff "Gestängeschuss" im Sinne der Beschreibung umfasst einzelne, insbesondere starre, miteinander mittelbar oder unmittelbar verbindbare Gestängeschüsse, die zum Ausbilden eines Bohrgestänges oder eines Bohrstrangs in längsaxialer Richtung miteinander verbunden werden können. Die Gestängeschüsse können zur Verbindung miteinander unter mechanischer Zwischenschaltung eines Zwischenelements oder ohne Zwischenschaltung eines Zwischenelements unter Verwendung einer beschriebenen Gewindebuchse mit einem Gewindestecker zusammengeschraubt werden. Ein Gestängeschuss muss nicht notwendigerweise an beiden Längsenden ein Element für ein Verschrauben aufweisen, so dass es möglich ist, dass der Gestängeschuss i) eine Gewindebuchse an einem Längsende und einen Gewindestecker am anderen Längsende, ii) je eine Gewindebuchse an den Längsenden, iii) eine Gewindebuchse an einem Längsende und ein andersgeartetes Kopplungselement am anderen Längsende aufweist.

Der Begriff "Bohrstrang" im Sinne der Beschreibung umfasst mehrere miteinander verbundene Gestängeschüsse. Mittels eines Bohrstrangs, der an seinem vorderseitigen Ende einen Bohrkopf und eine gegebenenfalls vorhandene Bohrkopfspitze aufweisen kann, die als Bohrwerkzeug (beispielsweise als Aufweitkopf) ausgestaltet sein kann, kann eine Bohrung durchgeführt werden.

Der Begriff "Erdbohrvorrichtung" umfasst im Sinne der Beschreibung eine (und damit jede) Vorrichtung, welche insbesondere einen Gestängeschüsse aufweisenden Bohrstrang in einem bestehenden oder zu erstellenden Kanal, insbesondere im Erdreich, bewegen kann, um eine Bohrung, insbesondere eine Horizontalbohrung (HD), zu erstellen oder aufzuweiten oder Rohrleitungen oder andere lange Körper in das Erdreich einzuziehen. Bei der Erdbohrvorrichtung kann es sich insbesondere um eine HD-Vorrichtung handeln. Eine Erdbohrvorrichtung kann eine einen Bohrstrang antreibende Vorrichtung sein, die insbesondere Erdreich verdrängend arbeiten kann. Der Bohrstrang kann translatorisch und/oder rotatorisch in längsaxialer Richtung des Bohrstrangs in das Erdreich eingebracht werden. Der Bohrstrang kann durch Zug- oder Druckbeaufschlagung und gegebenenfalls auch rotatorisch bzw. drehend im Erdreich bewegt werden.

Der Begriff "Antriebselement" umfasst im Sinne der Beschreibung ein an der Erdbohrvorrichtung angeordnetes Element, welches ausgestaltet ist, mit einem Bohrstrang bzw. einem Gestängeschuss des Bohrstrangs verbunden zu werden, um auf den Bohrstrang eine translatorische und/oder rotatorische Kraft auszuüben. Üblicherweise wird ein mit dem Bohrstrang zu verbindender Gestängeschuss mit dem Antriebselement in Eingriff gebracht, um dann den mit dem Antriebselement verbundenen Gestängeschuss mit dem schon verbohrten Bohrstrang zu verbinden.

Die Erfindung schafft auch eine Gewindebuchse an einem langgestreckten Körper für eine Gewindeverbindung mit einem Gewindestecker, wobei die Gewindebuchse ein konisches Innengewinde aufweist, bei dem bei dem ein Abschnitt einer Flanke des Innengewindes als Abschnitt einer Funktion darstellbar ist, die eine Krümmung aufweist, wobei der Abschnitt der Funktion über eine Höhe des mindestens 0,2-fachen der Gewindehöhe einen Winkel zu einer Verbindungslinie benachbarter Gewindegründe bzw. Gewindespitzen aufweist, der größer als 45° ist. Es kann eine zum Gewindestecker komplementäre Gewindebuchse geschaffen werden.

Ebenso wie für den Gewindestecker sind bevorzugte Ausführungsformen für die Gewindebuchse hinsichtlich der Ausgestaltung der Form, insbesondere einer komplementären Ausgestaltung bzw. einer zum Gewindestecker entsprechenden Ausgestaltung des Gewindes mit ähnlichen Vorteilen möglich.

Die Erfindung schafft auch in einem selbstständig eine patentbegründende Erfindung betreffenden Aspekt eine Gewindebuchse, die für eine Gewindeverbindung mit einem Gewindestecker ausgestaltet ist. Die Gewindebuchse kann die zuvor beschriebenen Eigenschaften aufweisen, aber auch unabhängig von der zuvor genannten Gewindebuchse ausgestaltet sein. Eine nicht-tragende Flanke des Innengewindes weist einen Abschnitt einer Funktion auf, die über einen Bereich um die Mitte zwischen Gewindegrund und Gewindespitze nach innen gekrümmt ist.

Auch für die Gewindebuchse, die einen selbstständig eine Patentfähigkeit begründenden Aspekt betrifft, sind bevorzugte Ausführungsformen für die Gewindebuchse hinsichtlich der Ausgestaltung der Form, insbesondere einer komplementären Ausgestaltung bzw. einer zum Gewindestecker entsprechenden Ausgestaltung des Gewindes mit ähnlichen Vorteilen möglich.

Die Erfindung schafft auch eine Gewindeverbindung, die einen in der Beschreibung beschriebenen Gewindestecker und eine in der Beschreibung beschriebene Gewindebuchse aufweist. Durch die Ausgestaltung sowohl von Gewindestecker als auch Gewindebuchse mit einer jeweils an die andere Ausgestaltung angepasste Form kann der Kerngedanke der Erfindung unterstützt bzw. weiter verbessert werden.

Die Erfindung schafft auch eine Verwendung eines in der Beschreibung beschriebenen Gewindesteckers oder einer Gewindebuchse für eine Gewindeverbindung mit einer Gewindebuchse bzw. einem Gewindestecker. Der Gewindestecker weist ein Außengewinde bzw. die Gewindebuchse weist ein Innengewinde auf, bei dem ein Abschnitt einer Flanke des Außengewindes bzw. des Innengewindes als Abschnitt einer Funktion darstellbar ist, die eine Krümmung aufweist, wobei der Abschnitt der Funktion über eine Höhe des mindestens 0,2-fachen der Gewindehöhe einen Winkel zu einer Verbindungslinie benachbarter Gewindegründe bzw. Gewindespitzen aufweist, der größer als 45° ist.

Eine Verspannung der Gewindebuchse gegen eine Schulter am Gewindestecker kann vorgesehen sein. Gewindestecker und Gewindebuchse können mit Stirnflächen in Anlage zueinander gebracht werden, so dass eine Kraftverschraubung zwischen einer Stirnfläche der Schulter und den tragenden Flanken, insbesondere denen im schulternahen Bereich, erfolgt. Die Schulter bzw. die Stirnfläche am Gewindestecker kann alternativ oder zusätzlich als maximaler Anschlag für die Schraubverbindung dienen. Mittels der Schulter bzw. der Stirnfläche(n) können auch Axialkräfte und/oder Torsionsmomente übertragen werden.

In einer bevorzugten Ausführungsform liegt der Stirnflächenwinkel der Stirnflächen des Gewindestecker und der Gewindebuchse, die in Anlage zueinander gelangen können, im Bereich von 65° bis 90°, insbesondere im Bereich von 65° bis 80°.

Sofern die Erfindung mittels unterschiedlicher Ausführungsformen und/oder Aspekten (betreffend bspw. eine vorrichtungsmäßige oder verwendungsmäßige Ausgestaltung) beschrieben wird, so ergänzen sich die Beschreibungen der einzelnen Ausgestaltungen bzw. Aspekte. Insbesondere können die Ausführungen hinsichtlich des Gewindesteckers auch für die Gewindebuchse und umgekehrt gelten. Ferner können auch die Ausführungen hinsichtlich Gewindestecker und/oder Gewindebuchse für den Aspekt einer "Verwendung" gelten. Die Ausführungen hinsichtlich der Geometrie des Gewindes, des damit verbundenen langgestreckten Körpers, eines Gestängeschusses und dergleichen gelten auch für den Aspekt einer Gewindeverbindung, bei der neben der beschriebenen Gewindebuchse auch ein beschriebener Gewindestecker vorhanden ist.

Es hat sich gezeigt, dass ein Gewindestecker, der wie in der Beschreibung beschrieben ausgestaltet ist, mit einer Gewindebuchse auch in gewissem Rahmen zusammenwirken kann, wenn die Gewindebuchse nicht komplementär bzw. korrespondierend zum Gewindestecker ausgestaltet ist. Ähnliches gilt für ein Zusammenwirken einer Gewindebuchse, die wie in der Beschreibung beschrieben ausgestaltet ist, mit einem Gewindestecker. Es wurde jedoch auch erkannt, dass eine zueinander korrespondierende bzw. komplementäre Ausgestaltung von Gewindestecker und Gewindebuchse bevorzugt sein kann.

In einer bevorzugten Ausführungsform beträgt die Gewindesteigung der Gewindebuchse und/oder des Gewindesteckers zwischen 5 mm und 9 mm, vorzugsweise 7 mm.

In einer bevorzugten Ausführungsform beträgt der Anschnittwinkel zwischen 20° und 30°.

In einer bevorzugten Ausführungsform beträgt das Anschnittmaß des Gewindesteckers mindestens 0,5 mm.

In einer bevorzugten Ausführungsform beträgt das Anschnittmaß der Gewindebuchse mindestens 1 mm.

In einer bevorzugten Ausführungsform beträgt die Differenz zwischen dem Längenmaß des Gewindesteckers und der Gewindebuchse höchstens 0,5 mm.

Die Erfindung wird nachfolgend anhand eines in den Zeichnungen dargestellten Ausführungsbeispiels näher erläutert.

In den Zeichnungen zeigt:

Fig. 1    einen Teilschnitt durch einen Gewindestecker;

Fig. 2    einen vergrößerten Ausschnitt aus der Figur 1, in den zusätzliche geometrische Daten eingezeichnet sind;

Fig. 3    eine zu dem Gewindestecker der Figur 1 in einer Ausführungsform korrespondierende Gewindebuchse; und

Fig. 4    einen vergrößerten Ausschnitt aus der Figur 3, mit der Angabe weiterer geometrischer Daten.

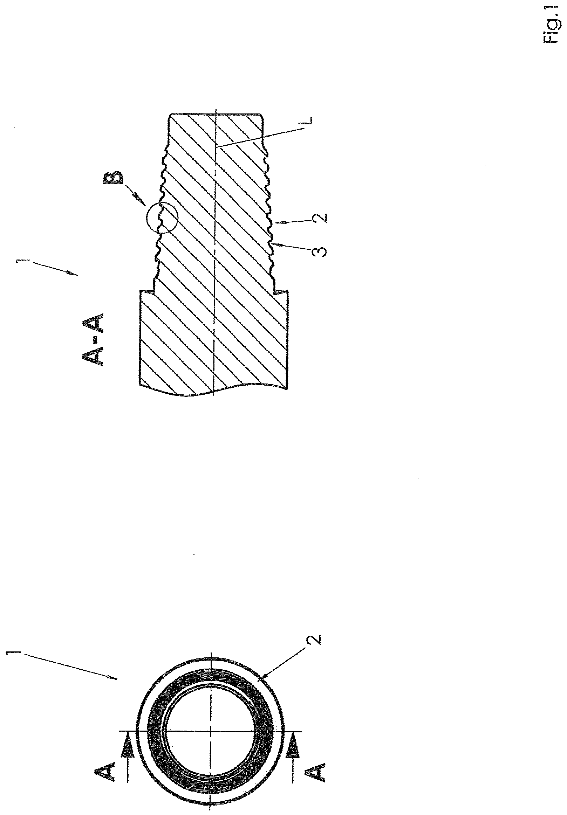

Figur 1 zeigt in der rechten der beiden Darstellungen einen Abschnitt eines langgestreckten Körpers 1 mit einem Gewindestecker 2 mit einem Außengewinde 3 in einer Schnittdarstellung. Der Gewindestecker 2 befindet sich endseitig an dem langgestreckten Körper 1, der als Gestängeschuss eines Bohrstrangs für eine Erdbohrvorrichtung oder ein Antriebselement für einen Gestängeschuss eines Bohrstrangs einer Erdbohrvorrichtung ausgestaltet ist.

Die rechte der beiden Darstellungen der Figur 1 ist eine Schnittdarstellung der linken Darstellung der Figur 1 entlang A-A. Die linke der beiden Darstellungen der Figur 1 zeigt eine Ansicht auf den Gewindestecker 2 des langgestreckten Körpers 1 in Längsrichtung des langgestreckten Körpers 1.

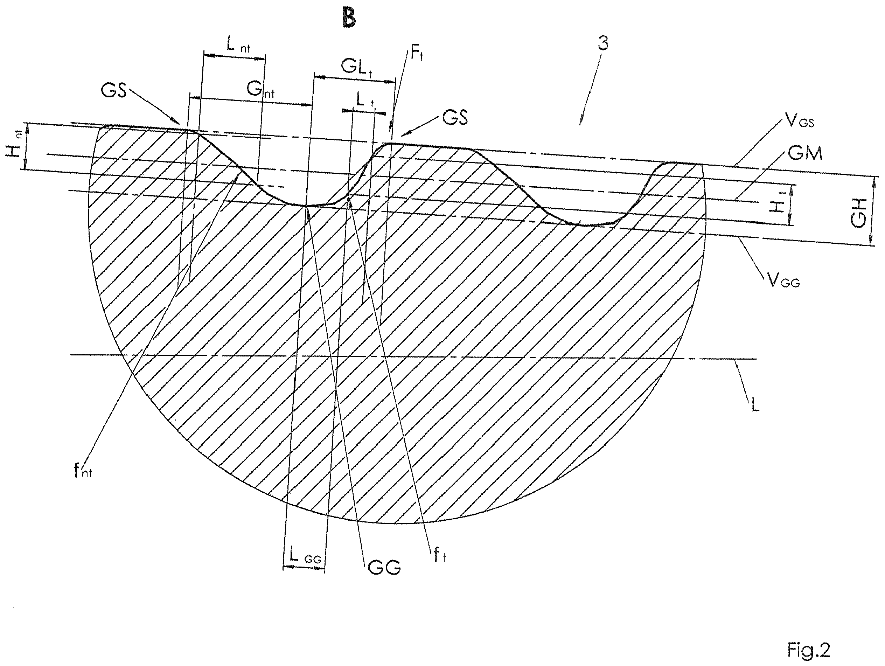

Der langgestreckte Körper 1 weist eine Längsachse L auf. Das Außengewinde 3 des Gewindesteckers 2 ist ein konisches Außengewinde. Das Außengewinde 3 des Gewindesteckers 2 ist in einer vergrößerten Darstellung in der Figur 2 dargestellt.

Figur 2 zeigt das Außengewinde 3 mit den für das Ausführungsbeispiel geltenden Größen. In dem Gewinde 3 des Gewindesteckers 2 sind Gewindegründe GG und Gewindespitzen GS eingezeichnet. Die Gewindegründe GG befinden sich auf einer Verbindungslinie $V_{GG}$ benachbarter Gewindegründe GG. Die Gewindespitzen GS befinden sich auf einer Verbindungslinie $V_{GS}$ benachbarter Gewindespitzen GS. Die Verbindungslinie $V_{GG}$ ist in dem dargestellten Ausführungsbeispiel parallel zur Verbindungslinie Vcs. Die Gewindehöhe ist mit GH bezeichnet und gibt die Länge bzw. den Abstand zwischen Gewindegrund GG und Gewindespitze GS an.

Ein Gewindegang weist eine tragende Flanke und eine nichttragende Flanke auf. Die tragende Flanke erstreckt sich vom Gewindegrund GG zur benachbarten Gewindespitze GS und ist in der Darstellung der Figur 2 rechts des Gewindegrundes GG angeordnet. Die nichttragende Flanke erstreckt sich nach links vom Gewindegrund GG zur benachbarten Gewindespitze GS.

Die tragende Flanke weist im dargestellten Ausführungsbeispiel einen Abschnitt auf, der mittels einer Funktion ft dargestellt werden kann. Die Funktion ft weist eine Krümmung auf. Der Abschnitt der Funktion $f_t$ weist über eine Höhe $H_t$ des mindestens 0,3-fachen der Gewindehöhe GH einen Winkel zu der Verbindungslinie $V_{GG}$ bzw. $V_{GS}$ benachbarter Gewindegründe GG bzw. Gewindespitzen GS auf, der größer als 45° ist.

Ferner ist ein Längenbereich $L_t$ des Abschnitts der Funktion ft, in dem die Funktion ft einen Winkel zu der Verbindungslinie $V_{GG}$ bzw. $V_{GS}$ benachbarter Gewindegründe GG bzw. Gewindespitzen GS aufweist, der größer als 45° ist, angegeben. Der Längenbereich bzw. die Länge $L_t$ erstreckt sich über mindestens das 0,1-fache der Länge zwischen Gewindegrund GG und Gewindespitze GS der tragenden Flanke.

Der Abschnitt der Funktion $f_t$ erstreckt sich in einem Bereich um die Mitte GM in der Gewindehöhe GH, der mindestens das 0,3-fache der Gewindehöhe GH aufweist, wobei der Bereich ausgestaltet ist, dass sich der Winkel des Abschnitts der Funktion ft in dem Bereich zu einer Verbindungslinie benachbarter Gewindegründe GG bzw. Gewindespitzen GS um weniger als 30° ändert.

In dem dargestellten Ausführungsbeispiel erstreckt sich die Flanke vom Gewindegrund GG über eine Länge $L_{GG}$ in Richtung einer Gewindespitze GS, in der der Winkel zu einer Verbindungslinie benachbarter Gewindegründe GG bzw. Gewindespitzen GS kleiner als 20° ist, und die Länge $L_{GG}$ größer als das 0,1-fache der Länge $GL_t$ zwischen

Gewindegrund GG und Gewindespitze GS der tragenden Flanke ist, deren Abschnitt durch den Abschnitt der Funktion ft dargestellt wird.

Die Funktion $f_t$ erstreckt sich vom Gewindegrund GG bis zu dem rechten Rand der mit $L_t$ bezeichneten Länge. An die Funktion $f_t$ schließt sich eine weitere Form $F_t$ an, die im dargestellten Ausführungsbeispiel ein kreisbogenförmiges Segment ist.

In dem dargestellten Ausführungsbeispiel setzt sich die tragende Flanke somit aus dem Abschnitt der Funktion ft und einem kreisbogenförmigen Segment Ft zwischen Funktion $f_t$ und Gewindespitze GS zusammen.

In dem dargestellten Ausführungsbeispiel setzt sich die nicht tragende Flanke aus drei Formen zusammen. Die erste Form ist ein kreisbogenförmiges Segment, das sich vom Gewindegrund GG nach links bis zu dem rechten Rand des Bereichs $L_{nt}$ erstreckt. An das kreisbogenförmige Segment schließt sich ein Bereich an, der mittels einer Funktion $f_{nt}$ dargestellt wird. Die Höhe, über die sich die Funktion $f_{nt}$ erstreckt, ist mit $H_{nt}$ angegeben. Der Abschnitt ist als Funktion mit einer Krümmung nach außen ausgestaltet. An die Funktion $f_{nt}$ schließt sich bis zur Gewindespitze GS ein kreisbogenförmiges Segment an.

Ein Gewindegang des in den Figuren gezeigten Ausführungsbeispiels für den Gewindestecker 2 umfasst neben der tragenden Flanke und der nichttragenden Flanke auch zumindest teilweise das Plateau auf dem Niveau der Verbindungslinie $V_{GS}$. Beispielsweise kann der Gewindegang der Figur 2, der mit den Bezeichnungen für die Größen versehen ist, ein Plateau im Anschluss an eine der beiden Gewindespitzen GS bis zur nächsten benachbarten Gewindespitze GS umfassen.

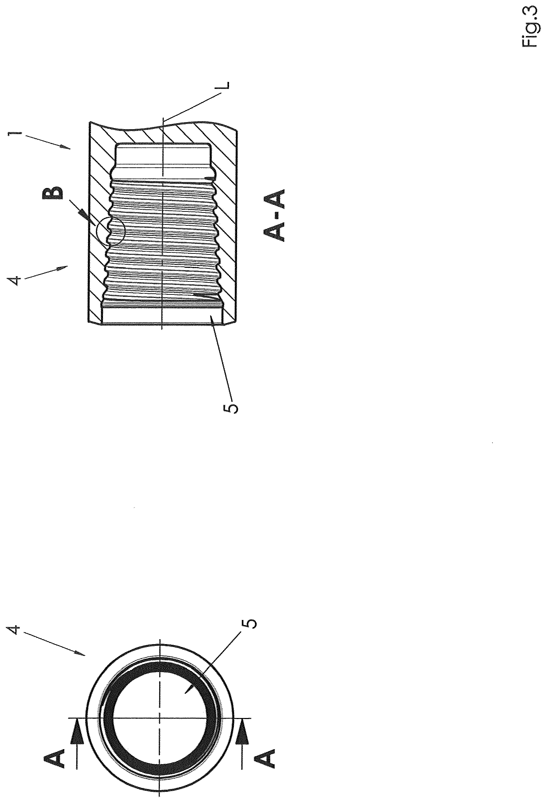

Figur 3 zeigt in der rechten der beiden Darstellungen einen Abschnitt eines langgestreckten Körpers 1 mit einer Gewindebuchse 4 mit einem Innengewinde 5. Die Gewindebuchse 4 befindet sich endseitig an dem langgestreckten Körper 1, der als Gestängeschuss eines Bohrstrangs für eine Erdbohrvorrichtung oder ein Antriebselement für einen Gestängeschuss eines Bohrstrangs einer Erdbohrvorrichtung ausgestaltet ist.

Die rechte der beiden Darstellungen der Figur 3 ist eine Schnittdarstellung der linken Darstellung der Figur 1 entlang A-A. Die linke der beiden Darstellungen der Figur 3 zeigt eine Ansicht auf die Gewindebuchse 4 des langgestreckten Körpers 1 in Längsrichtung des langgestreckten Körpers 1.

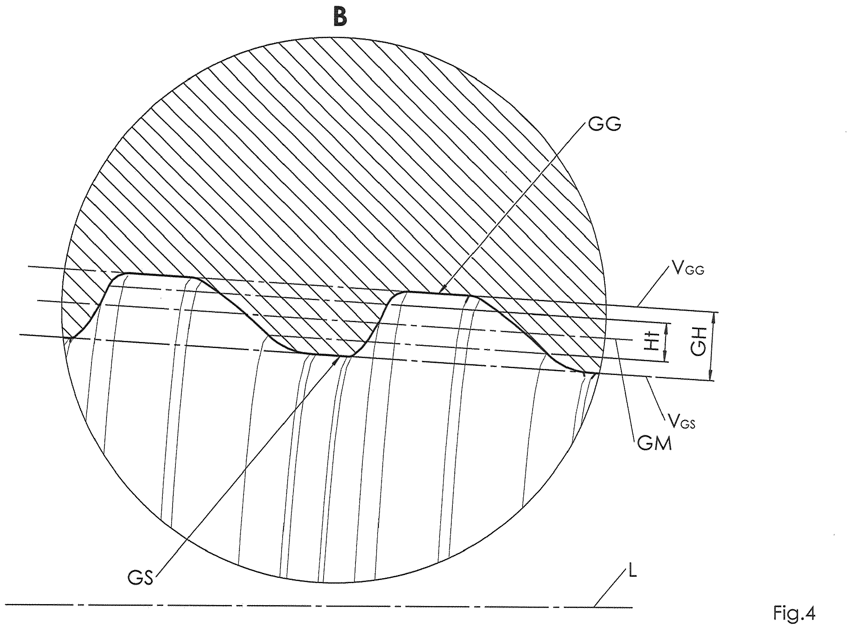

Der langgestreckte Körper 1 weist eine Längsachse L auf. Das Innengewinde 5 der Gewindebuchse 4 ist ein konisches Innengewinde. Das Innengewinde 5 der Gewindebuchse 4 ist in einer vergrößerten Darstellung in der Figur 4 dargestellt.

Figur 4 zeigt vergrößert das Innengewinde 5, das komplementär zu dem Außengewinde 3 des Gewindesteckers 2 ausgestaltet ist. Die in Figur 4 angegebenen Größen entsprechen im Wesentlichen den Größen der Figur 2.


**Patentansprüche**

1. Gewindestecker (2) an einem langgestreckten Körper (1) für eine Gewindeverbindung mit einer Gewindebuchse (4), wobei der Gewindestecker (2) ein konisches Außengewinde (3) aufweist, bei dem ein Abschnitt einer Flanke des Außengewindes (3) als Abschnitt einer Funktion (ft) darstellbar ist, die eine Krümmung aufweist, wobei der Abschnitt der Funktion (ft) über eine Höhe (Ht) des mindestens 0,3-fachen der Gewindehöhe (GH) einen Winkel zu einer Verbindungslinie ($V_{GG}$, $V_{GS}$) benachbarter Gewindegründe (GG) bzw. Gewindespitzen (GS) aufweist, der größer als 45° ist.

2. Gewindestecker (2) nach Anspruch 1, wobei der Abschnitt der Funktion (ft) über eine Höhe ($H_t$) des mindestens 0,35-fachen, insbesondere des mindestens 0,4-fachen, insbesondere des mindestens 0,45-fachen, insbesondere des mindestens 0,5-fachen, insbesondere des mindestens 0,55-fachen, insbesondere des mindestens 0,6-fachen, insbesondere des mindestens 0,65-fachen, insbesondere des mindestens 0,7-fachen, der Gewindehöhe (GH) einen Winkel zu einer Verbindungslinie ($V_{GG}$, $V_{GS}$) benachbarter Gewindegründe (GG) bzw. Gewindespitzen (GS) aufweist, der größer als 45° ist.

3. Gewindestecker (2) nach Anspruch 1 oder 2, wobei sich ein Längenbereich des Abschnitts der Funktion ($f_t$), der einen Winkel zu einer Verbindungslinie ($V_{GG}$, $V_{GS}$) benachbarter Gewindegründe (GG) bzw. Gewindespitzen (GS) aufweist, der größer als 45° ist, über eine Länge ($L_t$) zwischen Gewindegrund (GG) und Gewindespitze (GS) erstreckt, der das 0,1-fache der Länge zwischen Gewindegrund (GG) und Gewindespitze (GS) der Flanke ist, deren Abschnitt durch den Abschnitt der Funktion ($f_t$) darstellbar ist.

4. Gewindestecker (2) nach einem der Ansprüche 1 bis 3, wobei sich der Abschnitt der Funktion ($f_t$) in einem Bereich um die Mitte (GM) in der Gewindehöhe (GH) erstreckt, der mindestens das 0,3-fache der Gewindehöhe (GH) aufweist, wobei der Bereich ausgestaltet ist, dass sich der Winkel des Abschnitts der Funktion (ft) in dem Bereich zu einer Verbindungslinie ($V_{GG}$, $V_{GS}$) benachbarter Gewindegründe bzw. Gewindespitzen (GG, GS) um weniger als 30°, insbesondere weniger als 25°, insbesondere weniger als 20°, insbesondere weniger als 15°, ändert.

5. Gewindestecker (2) nach einem der Ansprüche 1 bis 4, wobei sich die Flanke vom Gewindegrund (GG) über eine Länge ($L_{GG}$) in Richtung einer Gewindespitze (GS) erstreckt, in der der Winkel zu einer Verbindungslinie benachbarter Gewindegründe (GG) bzw. Gewindespitzen (GS) kleiner als 20° ist, und die Länge ($L_{GG}$) größer als das 0,1-fache der Länge (GLt) zwischen Gewindegrund (GG) und Gewindespitze (GS) der Flanke ist, deren Abschnitt durch den Abschnitt der Funktion (ft) darstellbar ist.

6. Gewindestecker (2) nach einem der Ansprüche 1 bis 5, wobei sich der Abschnitt der Funktion ($f_t$) bis in den Bereich des Gewindegrunds (GG) erstreckt.

7. Gewindestecker (2) nach einem der Ansprüche 1 bis 6, wobei die Krümmung nach innen gewölbt ist.

8. Gewindestecker (2) nach einem der Ansprüche 1 bis 7, wobei die Flanke, deren Abschnitt als Abschnitt der Funktion ($f_t$) darstellbar ist, den Abschnitt der Funktion ($f_t$) und eine weitere Form ($F_t$) aufweist, die den Abschnitt der Flanke mit der Gewindespitze (GS) verbindet.

9. Gewindestecker (2) nach einem der Ansprüche 1 bis 8, wobei die Funktion (ft) stetig ist.

10. Gewindestecker (2) nach einem der Ansprüche 1 bis 9, wobei die Funktion eine Potenzfunktion mit einem Exponenten kleiner 1 und einer Basis mit einem potenzierten Argument ist.

11. Gewindestecker (2) nach Anspruch 10, wobei der Exponent im Bereich von 0,3 bis 0,7 liegt und/oder die Basis einen Term aufweist, bei dem das Argument mit einer Zahl potenziert ist, die im Bereich zwischen 2,5 und 5,8 liegt.

12. Gewindestecker (2) nach einem der Ansprüche 1 bis 11, wobei die Flanke eine tragende Flanke ist.

13. Gewindestecker (2) an einem langgestreckten Körper (1) für eine Gewindeverbindung mit einer Gewindebuchse (4), wobei der Gewindestecker (2) ein konisches Außengewinde (3) aufweist, insbesondere nach einem der Ansprüche 1 bis 12, wobei eine nicht-tragende Flanke des Gewindes einen Abschnitt einer Funktion ($f_{nt}$) aufweist, die über einen Bereich um die Mitte (GM) zwischen Gewindegrund (GG) und Gewindespitze (GS) nach außen gekrümmt ist.

14. Gewindestecker (2) nach Anspruch 13, wobei die Funktion (ft) der nicht-tragenden Flanke einen Logarithmus aufweist.

15. Gewindestecker (2) nach Anspruch 13 oder 14, wobei der Abschnitt der Funktion ($f_{nt}$) der nicht-tragenden Flanke in einem Abstand zum Gewindegrund (GG) beginnt und der Abstand zwischen Gewindegrund (GG) und Beginn des Abschnitts der Funktion ($f_{nt}$) mittels eines bogenförmigen Abschnitts überbrückt wird.

16. Gewindestecker (2) nach einem der Ansprüche 1 bis 15, wobei der langgestreckte Körper (1) ein Gestängeschuss eines Bohrstrangs für eine Erdbohrvorrichtung oder ein Antriebselement für einen Gestängeschuss eines Bohrstrangs einer Erdbohrvorrichtung ist.

17. Gewindebuchse (4) an einem langgestreckten Körper (1) für eine Gewindeverbindung mit einem Gewindestecker (2), wobei die Gewindebuchse (4) ein konisches Innengewinde (5) aufweist, bei dem ein Abschnitt einer Flanke des Innengewindes (5) als Abschnitt einer Funktion (ft) darstellbar ist, die eine Krümmung aufweist, wobei der Abschnitt der Funktion über eine Höhe des mindestens 0,3-fachen der Gewindehöhe (GH) einen Winkel zu einer Verbindungslinie ($V_{GG}$, $V_{GS}$) benachbarter Gewindegründe bzw. Gewindespitzen (GG, GS) aufweist, der größer als 45° ist.

18. Gewindebuchse (4) an einem langgestreckten Körper (1) für eine Gewindeverbindung mit einem Gewindestecker (2), insbesondere nach Anspruch 17, wobei eine nicht-tragende Flanke des Innengewindes (5) einen Abschnitt einer Funktion ($f_{nt}$) aufweist, die über einen Bereich um die Mitte (GM) zwischen Gewindegrund (GG) und Gewindespitze (GS) nach innen gekrümmt ist.

19. Gewindeverbindung umfassend einen Gewindestecker (2) nach einem der Ansprüche 1 bis 16 und eine Gewindebuchse (4) nach einem Anspruch 17 oder 18.

20. Verwendung eines Gewindesteckers (2) oder einer Gewindebuchse (4) für eine Gewindeverbindung mit einer Gewindebuchse (4) bzw. einem Gewindestecker (2), wobei der Gewindestecker (2) ein Außengewinde (3) bzw. die Gewindebuchse (4) ein Innengewinde (5) aufweist, bei bei dem ein Abschnitt einer Flanke des Außengewindes (3) bzw. des Innengewindes (5) als Abschnitt einer Funktion (ft) darstellbar ist, die eine Krümmung aufweist, wobei der Abschnitt der Funktion (ft) über eine Höhe des mindestens 0,3-fachen der Gewindehöhe (GH) einen Winkel zu einer Verbindungslinie ($V_{GG}$, $V_{GS}$) benachbarter Gewindegründe bzw. Gewindespitzen (GG, GS) aufweist, der größer als 45° ist.

Fig.1

Fig.2

Fig.3

A-A

Fig.4

## EUROPÄISCHER RECHERCHENBERICHT

Europäisches Patentamt
European Patent Office
Office européen des brevets

Nummer der Anmeldung

EP 23 15 2005

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/277963 A1 (CARROIS FABIEN [FR] ET AL) 24. Oktober 2013 (2013-10-24) * Absatz [0010] – Absatz [0022] * * Absatz [0035] – Absatz [0036] * * Absatz [0041] * * Absatz [0053] – Absatz [0062] * * Abbildungen * ----- | 1-20 | INV. E21B17/042 F16L15/00 F16L15/06 |
| X | CN 108 252 660 A (SHANGHAI HILONG PETROLEUM TUBULAR GOODS RES INSTITUTE) 6. Juli 2018 (2018-07-06) * das ganze Dokument * ----- | 1-20 | |
| X | CN 108 756 771 A (SHANGHAI HILONG PETROLEUM TUBULAR GOODS RES INSTITUTE) 6. November 2018 (2018-11-06) * das ganze Dokument * ----- | 1-20 | |
| X | CN 109 882 088 A (SHANGHAI HILONG PETROLEUM TUBULAR GOODS RES INSTITUTE) 14. Juni 2019 (2019-06-14) * das ganze Dokument * ----- | 1-20 | RECHERCHIERTE SACHGEBIETE (IPC) |
| X | US 2003/075924 A1 (HUNTING OILFIELD SERVICES INC [US]) 24. April 2003 (2003-04-24) * Absatz [0110] * ----- | 1-20 | E21B F16L |
| X | US 2 909 380 A (HOYE EDWIN C ET AL) 20. Oktober 1959 (1959-10-20) * das ganze Dokument * ----- | 1-9,12, 17,19,20 | |
| X | DE 31 14 651 A1 (NIPPON STEEL CORP [JP]) 11. Februar 1982 (1982-02-11) * das ganze Dokument * ----- -/-- | 1-16,20 | |

Der vorliegende Recherchenbericht wurde für alle Patentansprüche erstellt

| Recherchenort | Abschlußdatum der Recherche | Prüfer |
|---|---|---|
| München | 11. Juli 2023 | Pieper, Fabian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes Dokument

EPO FORM 1503 03.82 (P04C03)

EUROPÄISCHER RECHERCHENBERICHT

Europäisches
Patentamt

European
Patent Office

Office européen
des brevets

**Nummer der Anmeldung**

**EP 23 15 2005**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 794 092 A (CARLSON R ET AL) 26. Februar 1974 (1974-02-26) * Abbildungen * ----- | 1-12,20 | |
| X | US 2004/195835 A1 (NOEL THIERRY [FR] ET AL) 7. Oktober 2004 (2004-10-07) * Absatz [0142] * * Absatz [0147] * * Absatz [0163] * * Abbildungen 4, 5 * ----- | 13-16 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 11. Juli 2023 | Pieper, Fabian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................................................
& : Mitglied der gleichen Patentfamilie, übereinstimmendes
Dokument

EPO FORM 1503 03.82 (P04C03)

**Seite 2 von 2**

Europäisches
Patentamt

European
Patent Office

Office européen
des brevets

Nummer der Anmeldung

EP 23 15 2005

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

**EP 23 15 2005**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-12, 16, 17, 19, 20 (vollständig); 13-15, 18 (teilweise)

   Gewindestecker bzw. Gewindebuchse mit Winkel größer 45°
   ---

2. Ansprüche: 13-15, 18 (alle teilweise)

   Gewindestecker bzw. Gewindebuchse mit nach außen gekrümmter nicht-tragender Flanke
   ---

## ANHANG ZUM EUROPÄISCHEN RECHERCHENBERICHT
### ÜBER DIE EUROPÄISCHE PATENTANMELDUNG NR.

EP 23 15 2005

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2023

| Im Recherchenbericht angeführtes Patentdokument | Datum der Veröffentlichung | Mitglied(er) der Patentfamilie | Datum der Veröffentlichung |
|---|---|---|---|
| US 2013277963 A1 | 24-10-2013 | AR 084619 A1 | 29-05-2013 |
| | | BR 112013016580 A2 | 27-09-2016 |
| | | CA 2822504 A1 | 05-07-2012 |
| | | CN 103282708 A | 04-09-2013 |
| | | EP 2659175 A1 | 06-11-2013 |
| | | FR 2969738 A1 | 29-06-2012 |
| | | JP 6038044 B2 | 07-12-2016 |
| | | JP 2014506313 A | 13-03-2014 |
| | | MX 339248 B | 17-05-2016 |
| | | RU 2013131816 A | 20-01-2015 |
| | | US 2013277963 A1 | 24-10-2013 |
| | | WO 2012089305 A1 | 05-07-2012 |
| CN 108252660 A | 06-07-2018 | KEINE | |
| CN 108756771 A | 06-11-2018 | KEINE | |
| CN 109882088 A | 14-06-2019 | KEINE | |
| US 2003075924 A1 | 24-04-2003 | AR 025038 A1 | 06-11-2002 |
| | | AT 307957 T | 15-11-2005 |
| | | AU 761378 B2 | 05-06-2003 |
| | | CA 2381711 A1 | 15-02-2001 |
| | | CN 1375034 A | 16-10-2002 |
| | | DE 60023504 T2 | 27-07-2006 |
| | | EP 1200704 A1 | 02-05-2002 |
| | | JP 2003506602 A | 18-02-2003 |
| | | MX PA02001524 A | 21-07-2003 |
| | | NZ 517173 A | 30-01-2004 |
| | | TR 200200362 T2 | 21-08-2002 |
| | | US 6485063 B1 | 26-11-2002 |
| | | US 2003075924 A1 | 24-04-2003 |
| | | WO 0111182 A1 | 15-02-2001 |
| US 2909380 A | 20-10-1959 | KEINE | |
| DE 3114651 A1 | 11-02-1982 | CA 1165791 A | 17-04-1984 |
| | | DE 3114651 A1 | 11-02-1982 |
| | | FR 2480400 A1 | 16-10-1981 |
| | | GB 2074685 A | 04-11-1981 |
| | | IT 1170881 B | 03-06-1987 |
| | | JP S5750993 B2 | 29-10-1982 |
| | | JP S56143889 A | 09-11-1981 |
| US 3794092 A | 26-02-1974 | CA 955510 A | 01-10-1974 |
| | | US 3794092 A | 26-02-1974 |

EPO FORM P0461

Für nähere Einzelheiten zu diesem Anhang : siehe Amtsblatt des Europäischen Patentamts, Nr.12/82

Seite 1 von 2

**EP 4 403 741 A1**

**ANHANG ZUM EUROPÄISCHEN RECHERCHENBERICHT
ÜBER DIE EUROPÄISCHE PATENTANMELDUNG NR.**

EP 23 15 2005

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2023

| Im Recherchenbericht angeführtes Patentdokument | Datum der Veröffentlichung | Mitglied(er) der Patentfamilie | Datum der Veröffentlichung |
|---|---|---|---|
| US 2004195835 A1 | 07-10-2004 | AR 032421 A1 | 05-11-2003 |
| | | AT 280922 T | 15-11-2004 |
| | | BR 0207086 A | 20-01-2004 |
| | | CA 2437528 A1 | 22-08-2002 |
| | | CN 1489680 A | 14-04-2004 |
| | | CZ 20032444 A3 | 17-12-2003 |
| | | DE 60201731 T2 | 24-11-2005 |
| | | EP 1358421 A1 | 05-11-2003 |
| | | ES 2230465 T3 | 01-05-2005 |
| | | FR 2820806 A1 | 16-08-2002 |
| | | JP 4070201 B2 | 02-04-2008 |
| | | JP 2004524483 A | 12-08-2004 |
| | | MX PA03006962 A | 05-05-2004 |
| | | MY 126187 A | 29-09-2006 |
| | | PL 363612 A1 | 29-11-2004 |
| | | RU 2277665 C2 | 10-06-2006 |
| | | SA 02220697 B1 | 10-12-2006 |
| | | US 2004195835 A1 | 07-10-2004 |
| | | WO 02065012 A1 | 22-08-2002 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19608980
- EP 2334892 B1
- DE 19803304 A1
- EP 0324442 B1
- US 5060740 A
- WO 2006092649 A1